# EUROPEAN PATENT SPECIFICATION

(11) **EP 1 086 912 B1**
(45) Date of publication and mention of the grant of the patent: **10.03.2004**
(21) Application number: 99830599.9
(22) Date of filing: 22.09.1999
(51) Int. Cl.: B65G 47/82

(54) **Method and device for product transfer in the same plane**
Verfahren und Vorrichtung zur Übertragung von Produkten in eine gewisse Ebene
Méthode et dispositif de transfer de produits dans un même plan

(43) Date of publication of application: 28.03.2001
(73) Proprietor: BARILLA ALIMENTARE S.P.A., 43100 Parma (IT)
(72) Inventor: Pirenei, Alessandro, 43100 Parma (IT)
(74) Representative: Vannini, Torquato

(56) References cited:
- EP-A- 0 410 398
- EP-A- 0 550 114
- EP-A- 0 711 718
- US-A- 5 799 770
- PATENT ABSTRACTS OF JAPAN vol. 013, no. 140 (M-810), 6 April 1989 (1989-04-06) & JP 63 306120 A (MAKI SEISAKUSHO:KK), 14 December 1988 (1988-12-14)

## Description

As a general outline, this invention refers to a method and relative device for the planar transfer of products in general between two or more substantially coplanar positions, for example from a product-switching station which may be situated at the end of a product processing and/or handling line, to one (or several) contiguous and substantially coplanar station(s), moving these products towards other processing and/or handling operations, for example towards respective packaging and wrapping stages. See just as an example, document EP-A-0 550 114.

More in detail, the invention concerns a method to transfer on the same plane a group of products in general, capable of maintaining the original configuration-arrangement of the entire group, i.e. to maintain the same position, the same direction and the same distance of each product of the group with respect to the other products in the same group.

It is well-known how, in the processing and/or packaging lines of products in general, it is frequently necessary to transfer entire groups of products from one station to others, more or less contiguous, without altering their initial configuration as described above. It is also well-known that meeting this requirement becomes more difficult when the products to be transferred, even if homogeneous, are different from the point of view of shape and/or volume, when they are oriented differently from the other products in the group, or from corresponding products in other groups and, finally, when they are difficult to handle being fragile or delicate.

In particular, bakery food products fall within this category of products since, notoriously, vast dimensional tolerances have to be accepted because the size of these products is determined during the leavening and cooking stages and cannot, therefore, be controlled; their position with respect to contiguous products in the same group may vary unexpectedly because of unforeseeable movements due, for example, to vibration of the conveyor belts or any other contingent cause which may take place during the course through one or more processing stages towards the switching station where a device for planar transfer is operational.

This invention refers, in detail, but without being so limited, to a method of transferring on the same plane successive groups of bakery food products, maintaining the original configuration of these groups, in the above-mentioned sense, even when the configuration of the successive groups is different from group to group.

In order to carry out transfers of this type, in the known art it has been suggested and proposed the use of devices designed mainly taking into consideration the shape (volume, geometry and weight) of the products in each group and the arrangement of these products within their respective group. With particular and non-limited reference to bakery food products, the groups to be transferred generally have an equal and unchangeable configuration where the products are arranged in parallel lines, transversal to the planar transfer direction and reciprocally placed at a prefixed distance. The transfer devices utilised in the known art are essentially composed of a number of very flattened, parallel brushes, also placed transversally to the planar transfer direction of the groups of products and fixed in an overhanging position below a supporting trolley, or alternatively guided both in a vertical direction and in the above-mentioned planar transfer direction.

In a variation of the above-mentioned device, the brushes are substituted by corresponding rows of pegs, suitably distanced from each other in their respective rows. Lamina separators have also heen proposed, needle brushes or any other very slim or flat devices.

In these devices of the known art, the brushes or rows of pegs are placed at a distance substantially equal to the one which separates the rows of products in the single groups, in such a way that it is possible to insert these brushes from above between the rows of products, to subsequently cause their movement (through thrust) in the desired and prefixed transfer direction.

The drawbacks of the systems and relative planar transfer devices of the known art, are evident:

Application rigidity: in fact, not only do all the groups of products arriving at the switching station have to follow the same schematic configuration (parallel rows of products), but also the distance between the rows must be constantly equal to the predetermined distance and the products in each row have to be well-aligned and all facing the same direction. Every time the distance is changed, the transfer device must also be changed, inevitably bringing the line to a halt. Any product which is accidentally not aligned or is facing another direction, is overlooked or crushed by the brush which pushes all the other products in the same row, and may be "taken" by the following brush, causing backlog and relative disorder in the original configuration of the group. Normally, it is necessary to intervene manually to re-establish the original configuration, and this can also imply bringing the line to a halt.

During transfer, the products in the same row may move closer to, or further from, each other, change their position with respect to one another, or turn around so changing the original configuration of their respective group.

The problem at the basis of this invention is to contrive and make available a planar transfer method of the type taken into consideration, having functional characteristics totally independent of the configuration-arrangement of the groups to be transferred and of the shape (volume, geometry, weight) of the single components of these groups so as to overcome the drawbacks mentioned with reference to the prior art.

This problem is solved, according to the invention by a method for the planar transfer of successive groups of products in general, from a first position to a (or to more) substantially coplanar second position(s), for example from a product-switching station to a station which sends these products to other treatment processes, maintaining the original configuration-arrangement of these groups, characterised in that it includes the successive stages of:
- extemporarily forming, for each group of products present in the first position, a rigid cast of the entire group of products, enclosing the single products of each group in their respective original configuration-arrangement,
- moving the cast of the entire group with relative products individually enclosed, along a prefixed, planar transfer path, from the first position to another position,
- simultaneously release all the products of this group from their respective enclosures, removing this cast from the products.

This invention also refers to a device to put this planar transfer method into operation. This device must be capable of producing as many casts as there are groups of products arriving at the switching station and which, from there, must be transferred on the same plane towards other stations; this device must also be indifferent to the configuration-arrangement of the various groups and to the shape (volume, geometry and weight) of the single components of each group, so as to be of substantially universal use.

According to this invention, a device for the planar transfer of groups of products in general and bakery food products in particular in accordance with the method described above, is characterised in that it includes a cast-forming mould, supported by a trolley driven both vertically towards and away from this group, and along the prefixed planar transfer path of these groups of products, from one product-switching station to at least one substantially coplanar second station, this cast-forming mould including: a substantially plate-like horizontal support, connected to the trolley with which it is translationally integral and having transverse dimensions substantially equal to those of the stations, a number of vertical through-holes on this flat support, distributed over a thick network of lines and columns, a corresponding number of rod-like pegs, one for each through-hole, these pegs having a prefixed length greater than the length of the holes, to prevent the pegs falling out of the respective through-holes as a result of gravity.

These through-holes advantageously have a quincunx distribution on the plate-like support.

In the initial idle condition, this mould has a configuration where all the pegs protrude through a prefixed part below the plate-like support, making the mould look like a bed of nails.

When this cast-forming mould is lowered onto a group of products present in the switching station, some of the pegs on the plate-like support of the mould occupy all the spaces existing between the products of the group while the others rest on the top of the products, so substantially forming a cast of the entire group of products. Within this cast, each product is enclosed in a cage of pegs, where it remains confined. It can be seen immediately that the formation of this cast with relative enclosure of each product in the group, always takes place, completely independently of the configuration-arrangement of the group and the shape of the single products.

After moving this cast of the group of products along a prefixed planar transfer path towards and up to another product-processing station, the trolley with relative cast-forming mould, is raised away from the group so freeing it. The mould then returns to its original shape and the trolley supporting it is repositioned above the switching station.

The characteristics and advantages of the invention will be made clearer from the description of an example of operation of this method, given hereunder referring to the enclosed drawings where, as an indicative but not restrictive example, a planar transfer device putting this method into practice is illustrated.

In the drawings:
Fig. 1, schematically illustrates an axonometric projection of a planar transfer device according to this invention;
Figs. 2 and 3 illustrate perspective view of a part section of the same device as Fig. 1, in various utilisation stages;
Fig.4 illustrates a perspective view on an enlarged scale and part section of a detail of the device in Fig. 3;
Figs. 5 to 8 schematically illustrate an example of application of the method subject of this invention for planar transfer of bakery food products.

With reference to the above-mentioned figures, S globally indicates a switching station of groups G of products P in general; in the illustrated example, this station is substantially and schematically composed of the terminal section of a conveyor belt 1. A globally indicates a second station to which the above groups G have to be transferred, one after the other and using the method of this invention. In the illustrated example, this second station is substantially and schematically composed of the initial section of a conveyor belt 2, utilised to move the groups G to other processing operations, for example to the packaging and wrapping stages. Between the stations S and A, a horizontal plane T is foreseen, along which a prefixed path for the groups G to be transferred from station S to station A is created, as can be seen from the description. For simplification, this transfer path is illustrated as rectilinear, but it may also be curvilinear or mixed according to utilisation requirements, provided it is on the same plane.

A bridge structure 3 is simultaneously extended above the switching station S, the transfer plane T and the second station A. A trolley 4 is supported by this structure 3, along which it is guided using conventional means, which, therefore, are not illustrated in detail, in the direction of the above-mentioned rectilinear transfer path. At stations S and A, this trolley is driven, by conventional means not illustrated in detail, also in a vertical direction towards and away from these stations.

Below trolley 4 and forming an integral part therewith, a flat support 5 is fixed, substantially plate-like and suitably stiffened by a number of ribs, not illustrated.

This plate-like support 5 has prefixed transverse dimensions in accordance with those of the largest group G, in such a way that this group definitely remains within the perimeter of the support.

Preferably the support 5 has transverse dimensions substantially equal to the underlying switching station S and, in the example described in detail hereafter where the groups G to be transferred are composed of bakery food products transported on oven trays, its shape and size correspond to those of one or more of these oven trays.

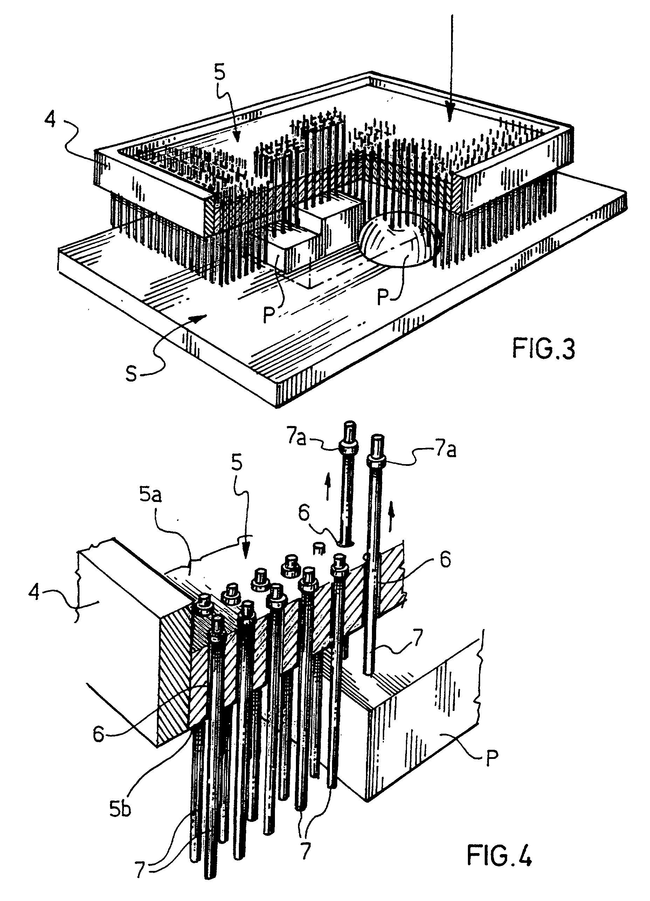

The support 5 (figs. 3 and 4) is crossed by a number of vertical through-holes 6 , distributed over a thick network of rows and columns, preferably with a quincunx pattern. It is to be noted that the first and last row of holes 6, as also the first and last column, are situated very close to the perimeter of the plate-like support 5.

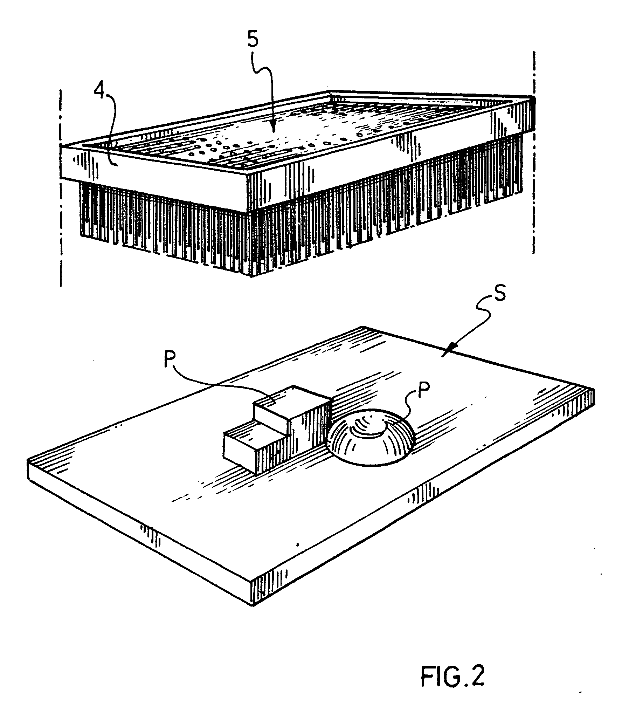

Each of the holes 6 receives a freely sliding peg 7, with a prefixed length, greater than the thickness of the plate-like support 5; each peg 7, at one end, has a cylindrical head 7a, flattened, with a diameter greater than the diameter of the corresponding hole 6, to prevent the peg from falling out of the hole as a result of gravity. In normal or idle conditions of the device subject of this invention (fig. 2), the heads 7a of the pegs 7, rest on the upper face 5a of the support 5, while the pegs 7 protrude through the lower face 5b (fig. 4) of the support, all with the same length. The flattened head (7a) can be joined to the respective peg (7) in an axially adjustable position; for example, the head (7a) can be composed of a nut screwed onto a section of the extremity of the corresponding peg (7), suitably threaded.

As will be seen from the following description, the group composed of the plate-like support 5 and the plurality of pegs 7, vertical and freely sliding into the respective holes 6, constitutes a cast-forming mould used to block each single product P of each group G, one independently from the other, in the position and arrangement originally attributed within the respective group, and to maintain this position-arrangement during the planar transfer of this group from station S to station A.

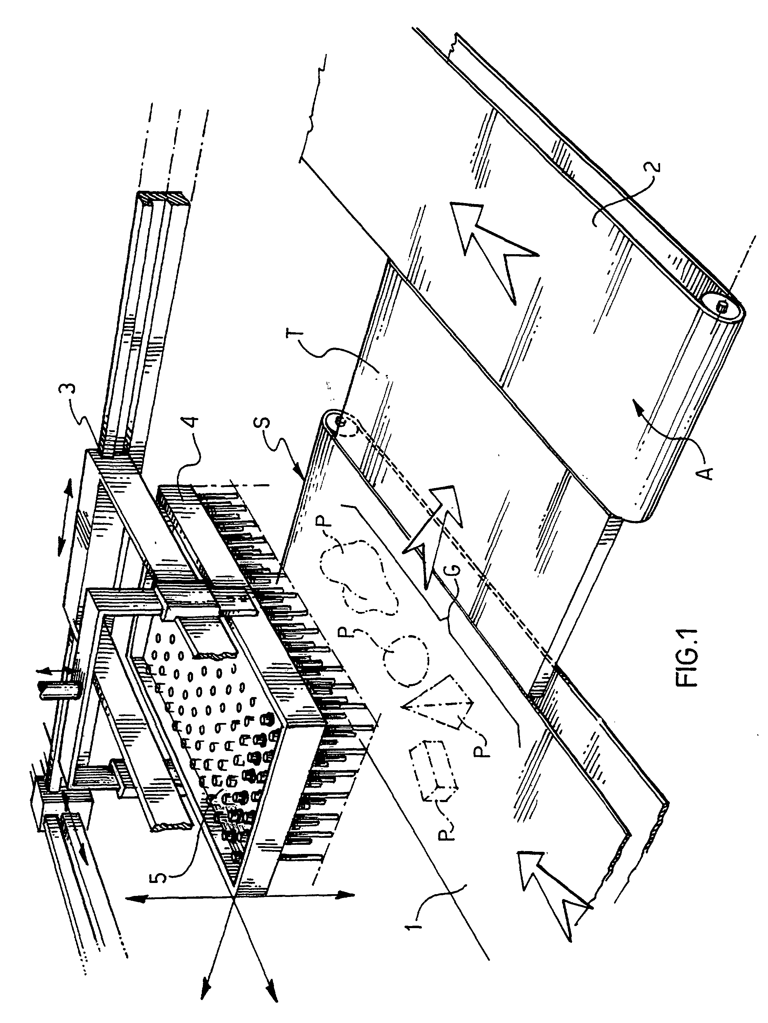

For this purpose, under initial operating conditions (figs. 1 and 2) and in accordance with this invention, the trolley 4 is stationary above the switching station S and at a prefixed distance from it. The station S is "occupied" by a first group G of products P, all differing from each other as regards shape, volume, geometry and/or arrangement within the group. To transfer this group G on the same plane, without altering its initial configuration-arrangement, the trolley 4 is lowered onto it, until it reaches the position where the cast-forming mould 5,6,7, has covered all the products P of the group (figs. 3 and 4). In this position, some of the pegs 7 of this mould occupy the free spaces between the products themselves and between the products and the perimeter of the plate-like support 5, while the remaining pegs 7 rest on the upper surfaces of each product. In short, by lowering the trolley 4, the mould 5,6,7 forms a rigid cast of the entire group G, where the single products P of this cast are rigidly enclosed by the pegs 7 in the respective positions occupied in the initial configuration-arrangement of this first group. It is to be noticed that the rigid cast of the group G of products is formed only as a result of the weight of the single pegs 7 which remain in their original position when they do not "meet" the products P, while they slide into their respective holes 6 when they meet them, being raised to a level, on the plate-like support 5, equal to the level, on station S, of the products P on which these pegs rest.

At this stage, by means of appropriate guided traverse of the trolley 4, the entire cast of the group G is positively transferred to the station A, along a prefixed path of the plane T.

It is to be noticed that during this planar transfer, the products P of the first group G cannot move in any way whatsoever unless being translated in the prefixed direction; in fact, each single enclosure formed by the pegs 7, of the mould 5,6,7, prevents the products from moving closer to or further away from one another, from moving at an angle, turning around or losing their alignment with the other products within the same group.

At the switching station S, now free, a new group G can arrive having a configuration-arrangement equal to or different from the first group, considered above.

At the station A, the trolley 4 is raised to a level where all the pegs 7 of the mould 5,6,7 are clearly removed from the products P of the first group G. With this operation, all the products P of the first group G are simultaneously released from the rigid cast previously formed by the mould, which then returns to its original configuration. The first group G can now be sent on to the following treatment processes, while the trolley 4 returns to the switching station S, positioned above the new group for planar transfer.

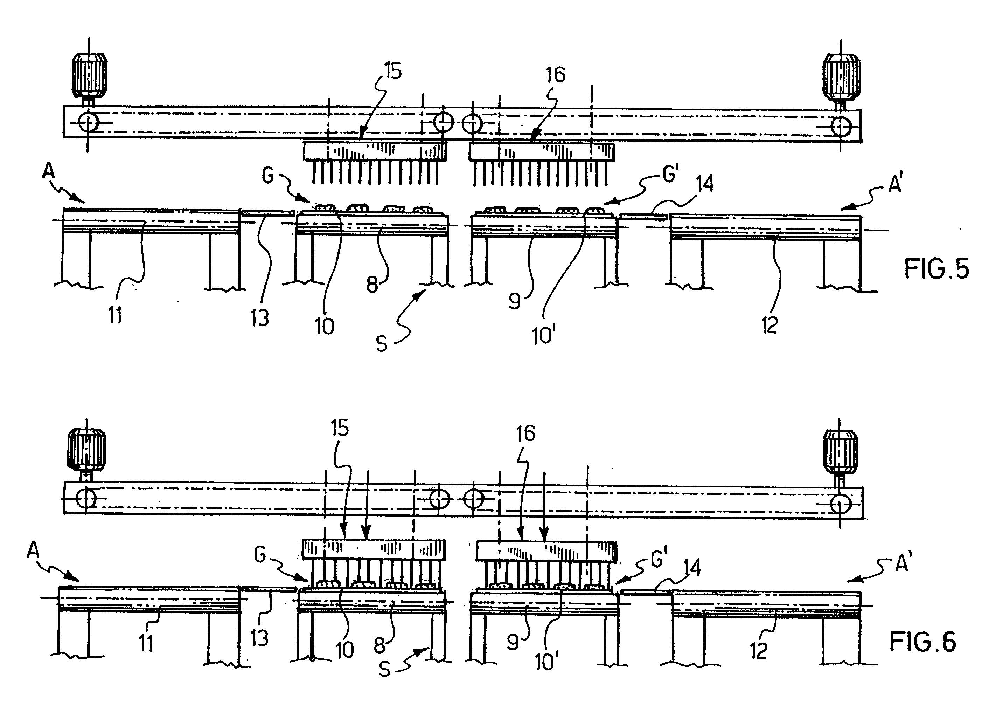

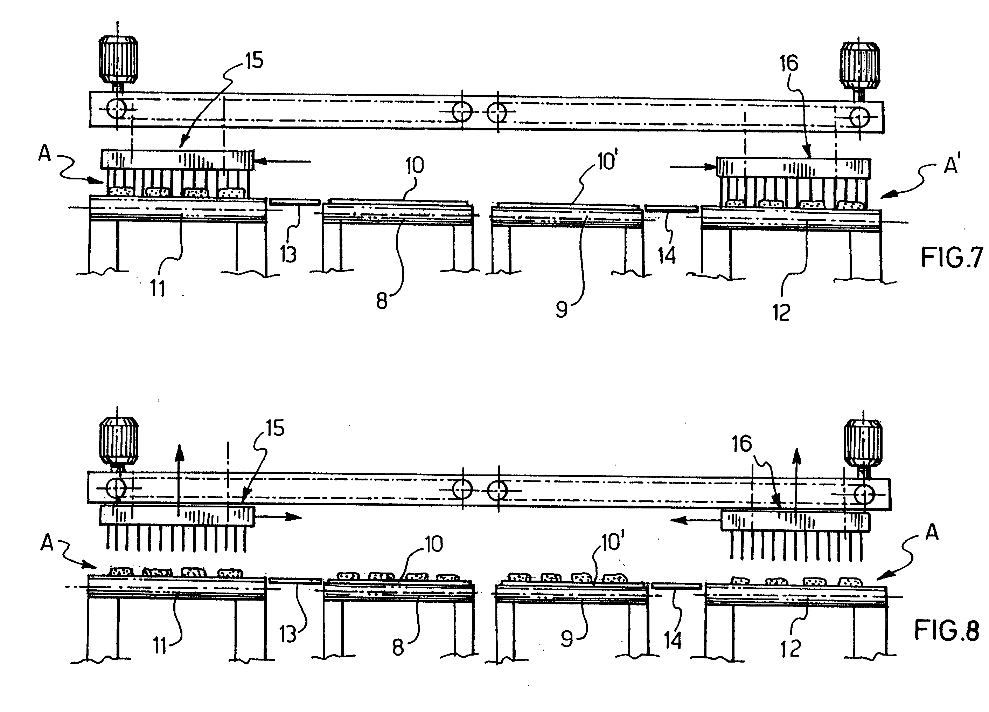

The method and relative device for planar transfer subject of this invention can be particularly and advantageously applied in the sector of bakery food products. Figs. 5 to 8 schematically illustrate such an application.

In particular and with reference to the above-mentioned figures, the switching station S includes the terminal sections of two equal conveyor belts, 8 and 9, parallel and situated side by side, used to transport the same number of groups G and G' of food products, for example of the type commercially known with the name "nastrine", these groups G and G' being arranged equally on their respective flat oven trays 10 and 10', on which they have passed through stations of leavening, cooking and cooling, normally provided for on this production line. The conveyor belts 8 and 9 have the same advancement rate.

The initial sections of another two equal conveyor belts 11 and 12, situated laterally to the conveyor belts 9 and 10 respectively, constitute two stations A and A' to which the products of the groups G and G' must be transferred. The stations A and A' are distanced from the conveyor belts 8 and 9 of the station S, by respective transfer planes 13 and 14.

In this switching station, two equal planar transfer devices subject of this invention are present, each of which has a respective cast-forming mould 15 and 16, having an equal or substantially equal shape and size to that of the above-mentioned oven trays 10 and 10'.

In this particular application, the method and relative planar transfer , device subject of this invention are utilised for the double purpose of recovering the oven trays, freeing them of their respective groups G and G' of food products, and maintaining the original configuration-arrangement of these groups.

For this purpose, the respective cast-forming moulds 15 and 16 are lowered onto the oven trays 10 and 10', now present in the switching station S, until all the pegs 7 have safely enclosed the single products on the oven trays 10 and 10'. At this stage, the groups of products are transferred on the same plane to the respective stations A and A', while the oven trays 10 and 10', free of their products, are taken to an bakery tray deposit (not illustrated) by the conveyor belts 8 and 9 advancing at the same speed, and two new oven trays with respective groups of products reach the switching station.

The cast-forming moulds are now raised and, while they are returning to the switching station, the groups so freed are sent on to successive operations.

This invention so-conceived, is susceptible to numerous variations and modifications which can be designed by technicians operating in this field and, as such, they fall within the limits of this invention as it is defined in the appended claims. For example, the cast-forming mould 5,6,7 can easily and advantageously be associated with or constitute the mobile head of a robot provided with a planar transfer programme designed to satisfy detailed and contingent technical requirements.

## Claims

1. A method for the planar transfer of successive groups (G) of products (P) in general from a first position or product-switching station (S) to at least one substantially coplanar second position or station (A), without altering the original configuration-arrangement of these groups (G), **characterised by** including the successive stages of: extemporarily forming, for each group of products (G) present in the said first position or switching station (S), a rigid cast of the entire group (G) of products, by enclosing each product (P) of said group (G) of products in its respective position occupied in the original configuration-arrangement of said group in a cast-forming mould (5), lowered above the group of products (4), said cast-forming mould being provided with vertically freely sliding pegs (7), positively moving this cast-forming mould (5) together with the cast of the entire group, with relative products (P) individually enclosed into the freely sliding pegs (7), along a prefixed planar transfer path, from said first position or switching station (S) to the other position or station (A), then freeing all the products (P) of this group from their respective enclosures by lifting this rigid cast-forming mould away from these products (P).

2. A device for the planar transfer of groups (G) of products (P) in general and bakery products in particular, from a product-switching station (S) to another substantially coplanar station (A), without altering the original configuration-arrangement of these groups, **characterised by** including a cast-forming mould (5,6,7) supported by a trolley (4), positioned above the said switching station (S) and moving both vertically towards and away from the station (S) and along the prefixed planar transfer path, the said mould (5,6,7) including: a substantially flat, horizontal, plate-like support (5), rigidly connected to said trolley (4) and having transverse dimensions substantially equal to those of said station (S), a number of through-holes (6), extending through the plate-like support (5), distributed over a thick network of rows and columns, a corresponding number of rod-like pegs (7), each freely sliding into a respective through-hole (6) in the plate-like support (5), these pegs (7) having a prefixed length greater than the length of the respective through-holes, a means (7a) to prevent the pegs (7) falling out of the respective through-holes (6) on the plate-like support.

3. A device according to claim 2, **characterised in that** said means to prevent the pegs (7) from falling out is composed of a flattened head (7a), substantially circular, connected to one extremity of each peg and having a diameter greater than the diameter of said through-holes (6).

4. A device according to claim 3, **characterised in that** said head (7a) is joined to the respective peg in an axially adjustable position.

5. A device according to claim 4, **characterised in that** said through-holes (6) are distributed over the plate-like support (5), in a quincunx arrangement.

## Patentansprüche

1. Verfahren zum planaren Überführen von aufeinander folgenden Gruppen (G) von Produkten (P) im allgemeinen von einer ersten Position oder Produktwechselstation (S) zu mindestens einer im wesentlichen koplanaren zweiten Position oder Station (A) ohne Änderung der ursprünglichen Konfigurationsanordnung dieser Gruppen (G), **dadurch gekennzeichnet, dass** dieses folgende aufeinander folgende Schritte umfasst: das für jede in der ersten Position oder Wechselstation (S) vorhandene Gruppe von Produkten (G) unvorbereitete Bilden eines starren Abdruckes der gesamten Gruppe (G) von Produkten, der jedes Produkt (P) der Gruppe (G) von Produkten in seiner jeweiligen in der ursprünglichen Konfigurationsanordnung dieser Gruppen eingenommenen Position einschließt, in einer abdruckbildenden Form, die über die Gruppe von Produkten (G) abgesenkt wird, wobei die abdruckbildende Form mit sich vertikal frei verschiebenden Stiften (7) versehen ist, das formschlüssige Bewegen dieser abdruckbildenden Form (5) zusammen mit dem Abdruck der gesamten Gruppe mit den jeweiligen von den sich frei verschiebenden Stiften (7) einzeln eingeschlossen Produkten (P) entlang einem vorher festgelegten planaren Überführungsweg von der ersten Position oder Wechselstation (S) zu der anderen Position oder Station (A), danach das Befreien aller Produkte (P) dieser Gruppe aus ihren jeweiligen Einfassungen durch Heben dieser starren abdruckbildenden Form weg von diesen Produkten.

2. Vorrichtung zur planaren Überführung von Gruppen (G) von Produkten (P) im allgemeinen und von Bäckereiprodukten im besonderen von einer Produktwechselstation (S) zu einer anderen im wesentlichen koplanaren Station (A) ohne Änderung der ursprünglichen Konfigurationsanordnung dieser Gruppen, **dadurch gekennzeichnet, dass** diese eine abdruckbildende Form (5, 6, 7) umfasst, die von einem oberhalb der Wechselstation (S) positionierten und sich sowohl vertikal in Richtung zu der Station (S) und von dieser weg und längs dem vorbestimmten planaren Überführungsweg bewegenden Laufwagen (4) getragen wird, die Form (5, 6, 7) folgendes umfasst: einen im wesentlichen flachen, horizontalen, plattenartigen Träger (5), der starr mit dem Laufwagen (4) verbunden ist und Querabmessungen aufweist, die im wesentlichen gleich denjenigen der Station (S) sind, eine Anzahl von sich durch den plattenartigen Träger (5) hindurch erstreckenden, über ein dichtes Netz von Reihen und Kolonnen verteilten Durchgangslöchern (6), eine entsprechende Anzahl von stabartigen Stiften (7), die sich jeweils frei in ein jeweiliges Durchgangsloch (6) in dem plattenartigen Träger (5) verschieben, wobei diese Stifte (7) eine vorbestimmte Länge aufweisen, die größer als die Länge der jeweiligen Durchgangslöcher (6) ist, und ein Mittel (7a) zur Verhinderung des Herausfallens der Stifte (7) aus den jeweiligen Durchgangslöchern (6) auf dem plattenartigen Träger (5).

3. Vorrichtung nach Anspruch 2, **dadurch gekennzeichnet, dass** das Mittel zur Verhinderung des Herausfallens der Stifte (7) aus einem abgeflachten im wesentlichen kreisrunden Kopf (7a) besteht, der mit einem Ende jedes Stiftes verbunden ist und einen Durchmesser aufweist, der größer als der Durchmesser der Durchgangslöcher (6) ist.

4. Vorrichtung nach Anspruch 3, **dadurch gekennzeichnet, dass** der Kopf (7a) in einer axial verstellbaren Stellung mit dem jeweiligen Stift verbunden ist.

5. Vorrichtung nach Anspruch 4, **dadurch gekennzeichnet, dass** die Durchgangslöcher (6) in einer Fünfpunkte-Anordnung über den plattenartigen Träger (5) verteilt sind.

## Revendications

1. Procédé pour le transfert dans un plan de groupes successifs (G) de produits (P) en général depuis une première position ou poste de distribution de produits (S) jusqu'à au moins une seconde position ou poste essentiellement coplanaire (A), sans modifier la disposition-configuration originale de ces groupes (G), **caractérisé par** les étapes successives consistant à former de manière improvisée, pour chaque groupe de produits (G) présent dans ladite première position ou premier poste de distribution (S), une pièce moulée rigide du groupe entier (G) de produits, à enfermer chaque produit (P) dudit groupe (G) de produits dans sa position respective occupée dans la disposition-configuration originale dudit groupe dans un moule de formation de pièce moulée (5) abaissé au-dessus du groupe de produits (4), ledit moule de formation de pièce moulée étant muni de taquets (7) coulissants librement verticalement pour déplacer positivement ce moule de formation de pièce moulée (5) conjointement avec la pièce moulée du groupe entier, avec des produits relatifs (P) enfermés individuellement dans les taquets (7) coulissants librement le long d'un chemin de transfert planaire prédéfini, depuis ladite première position ou premier poste de distribution (S) jusqu'à l'autre position ou poste (A), libérant ainsi tous les produits (P) de ce groupe de leurs enceintes respective, à relever ce moule de formation d'une pièce moulée rigide au-dessus de ces produits (P).

2. Dispositif pour le transfert dans un plan de groupes (G) de produits (P) en général, et de produits de boulangerie en particulier, depuis un poste de distribution de produits (S) jusqu'à un autre poste essentiellement coplanaire (A), sans modifier la disposition-configuration originale de ces groupes, **caractérisé en ce qu'**il comprend un moule de formation de pièce moulée (5, 6, 7) supporté par un chariot (4), positionné au-dessus dudit poste de distribution (S) et se déplaçant verticalement à la fois en direction et en retrait du poste (S) et le long du chemin de transfert planaire prédéfini, ledit moule (5, 6, 7) comprenant un support horizontal en forme de plateau essentiellement plat (5), connecté de manière rigide audit chariot (4) et ayant des dimensions transversales essentiellement égales à celles dudit poste (S), un nombre de trous débouchants (6), s'étendant à travers le support en forme de plateau (5), distribués sur un réseau épais de rangées et de colonnes, un nombre correspondant de taquets en forme de tige (7), chacun glissant librement dans un trou débouchant respectif (6) dans le support en forme de plateau (5), ces taquets (7) ayant une longueur prédéfinie supérieure à la longueur des trous débouchants respectifs, un moyen (7a) pour empêcher les taquets (7) de retomber des trous débouchants respectifs (6) sur le support en forme de plateau.

3. Dispositif selon la revendication 2, **caractérisé en ce que** ledit moyen pour empêcher les taquets (7) de retomber est composé d'une tête aplatie (7a) essentiellement circulaire, connectée à une extrémité de chaque taquet et ayant un diamètre supérieur au diamètre desdits trous débouchants (6).

4. Dispositif selon la revendication 3, **caractérisé en ce que** ladite tête (7a) est reliée au taquet respectif dans une position ajustable axialement.

5. Dispositif selon la revendication 4, **caractérisé en ce que** lesdits trous débouchants (6) sont distribués sur le support en forme de plateau (5), dans une disposition en quinconce.
